# FASCICULE DE BREVET EUROPEEN

(11) **EP 1 429 153 B1**
(45) Date de publication et mention de la délivrance du brevet: **28.05.2008**
(21) Numéro de dépôt: 03104610.5
(22) Date de dépôt: 09.12.2003
(51) Int. Cl.: G01S 13/78

(54) **Source programmable de trains d'impulsions sur fréquence intermédiaire et chaIne d'émission IFF l'utilisant**
Programmierbare Impulsfolgenquelle auf Zwischenfrequenz und IFF Sendeanordnung unter verwendung derselben
Programmable source of pulse trains on intermediate frequency and IFF emitting assembly using it

(30) Priorité: 10.12.2002 FR 0215597
(43) Date de publication de la demande: 16.06.2004
(73) Titulaire: Thales, 92200 Neuilly Sur Seine (FR)
(72) Inventeur: PROVOST, Claude, 94117 CX, ARCUEIL (FR); SOULA, Stéphane, 94117 CX, ARCUEIL (FR)
(74) Mandataire: Lucas, Laurent Jacques

(56) Documents cités:
- EP-A- 1 184 679
- FR-A- 2 707 015
- US-A- 5 867 535

## Description

L'invention concerne une source avec modulation d'impulsion à paramètres réglables et son utilisation dans une chaîne d'émission IFF ou radar secondaire.
Dans le domaine de l'IFF (Identification Friend or Foe en anglais, identification allié ou ennemi) ou du radar secondaire, différentes formes d'ondes et modulations sont utilisées suivant le mode de fonctionnement de l'émetteur IFF comme le montre le tableau ci-dessous.

| **Mode d'émission IFF** | **Modulation utilisée** |
|---|---|
| Interrogations & Réponses Mk X et Mk XII | Impulsions |
| Interrogations Mode S | Impulsions + DPSK |
| Réponses Mode S | Impulsions de type PPM |
| Interrogations & Réponses Mode 5 | Impulsions + MSK |

A chaque mode d'émission IFF est associée une source de modulation placée dans la chaîne d'émission. Ainsi, la chaîne d'émission IFF comporte quatre sources différentes pour chacun des quatre modes d'émission IFF indiqués ci-dessus. Chaque source est composée d'un oscillateur contrôlé en tension VCO et d'une boucle à verrouillage de phase PLL qui fournissent directement un signal à la fréquence de sortie. La sortie de la source est alors modulée pour obtenir le signal IFF souhaité.

Une chaîne d'émission IFF classique comporte donc:
- une première source reliée à deux voies, chacune comportant un modulateur d'amplitude pour la réalisation de la modulation d'impulsions, les deux voies correspondant aux deux fréquences nécessaires, une pour l'émission et l'autre pour le test de la chaîne de réception dans le mode Interrogation et réponse Mk X et Mk XII,
- une deuxième source reliée à deux voies, chacune comportant un modulateur d'amplitude et un modulateur DPSK pour la réalisation de la modulation d'impulsions à saut de phase, les deux voies correspondant aux deux fréquences nécessaires, une pour l'émission et l'autre pour le test de la chaîne de réception dans le mode Interrogation Mode S,
- une troisième source reliée à deux voies, chacune comportant un modulateur d'amplitude et un modulateur MSK pour la réalisation de la modulation d'impulsions à saut de phase minimum, les deux voies correspondant aux deux fréquences nécessaires, une pour l'émission et l'autre pour le test de la chaîne de réception dans le mode Interrogation et Réponses Mode 5.

Les inconvénients d'une telle chaîne d'émission IFF sont sa complexité de mise en ouvre en raison du nombre de sources de fréquence et de modulateurs utilisés.

Le brevet US 5,867,535 propose de réduire la complexité d'une chaîne d'émission nécessitant la mise en oeuvre de multiples fonctions radio en utilisant un processeur de traitement du signal DSP. A partir des informations à émettre, le processeur de traitement du signal DSP génère les signaux en phase et quadrature vers un réseau de portes programmables FPGA (Field Programmable Gate Array en anglais). Le FPGA contrôle ensuite un modulateur réalisant la modulation . Le modulateur produisant alors un signal modulé sur une fréquence intermédiaire comportant les informations.

Le document EP-A-1184679 décrit une source programmable selon la préambule de la revendication 1.

Cette solution appliquée aux émetteurs IFF nécessiterait toujours au moins deux sources de fréquence et modulateurs afin de générer les sauts de fréquence des modulations DPSK et MSK.

Pour cette raison, le nombre de mode d'émission IFF utilisé par la chaîne actuelle est souvent très faible en comparaison du nombre de mode prévu dans le cadre de l'IFF (24 modes différents).

Les équipements du type IFF sont intégrés dans des systèmes occupant des volumes de plus en plus restreints. Or, en raison de l'architecture de la chaîne d'émission IFF actuels, les limites de réduction du volume occupé sont vite atteintes.

En outre, la multiplication des sources et modulateurs rendent la précision en terme de fréquence des chaînes IFF grossière pour un coût de fabrication qui reste élevé.
La présente invention permet de palier ces inconvénients en supprimant l'obligation de disposer dans la chaîne d'émission d'une source de fréquence propre à chaque mode d'émission IFF par l'utilisation d'un synthétiseur de fréquence numérique capable de générer des trains d'impulsions.

Un objet de l'invention est une source programmable de trains d'impulsions sur fréquence intermédiaire comportant:
- Une entrée recevant une commande d'émission comportant le mode d'émission,
- Un dispositif d'instruction relié à cette entrée de commande d'émission, générant des instructions d'émission,
- Un dispositif de formatage transcrivant les instructions d'émission en au moins un premier signal de contrôle,
- Un dispositif de synthèse de fréquence numérique recevant au moins le premier signal de contrôle, générant un signal modulé sur une fréquence intermédiaire, le signal est modulé selon un train d'impulsion ayant des caractéristiques qui sont déterminées par le premier signal de contrôle.

Les caractéristiques d'un train d'impulsions comportent, notamment, la présence ou non de sauts de fréquence et les caractéristiques de ces sauts de fréquence.

Une amélioration est apportée à l'invention permettant d'obtenir un dispositif comportant moins de liaison physique et une meilleure précision des caractéristiques du signal modulé obtenu. Cette amélioration peut être obtenue lorsque le dispositif de formatage comporte une interface d'entrée comportant des registres d'entrée reliée command és par les instructions d'émission en fonction de la commande d'émission reçue par le dispositif d'instruction. Cette amélioration peut aussi être obtenu lorsque le dispositif de synthèse de fréquence numérique comporte des registres d'entrée commandés par le premier signal de contrôle.

Un autre objet de l'invention est une chaîne d'émission IFF comportant:
- la source programmable de trains d'impulsions sur fréquence intermédiaire, comportant :
   - une entrée reliée à une interface homme-machine ou à un dispositif externe, générant la commande d'émission,
   - un dispositif de formatage générant un deuxième et un troisième signal de contrôle en fonction des instructions d'émission,
- un dispositif de translation recevant le signal modulé par un train d'impulsions sur fréquence intermédiaire, le deuxième et le troisième signal de contrôle, générant un signal modulé par un train d'impulsions sur la fréquence donnée par le deuxième signal de contrôle ayant une amplitude donnée par le troisième signal de contrôle.

Le dispositif de synthèse de fréquence d'une telle chaîne d'émission IFF génèrent, notamment, au moins des signaux modulés par trains d'impulsions ou des signaux modulés par trains d'impulsions DPSK ou des signaux modulés par trains d'impulsions MSK ou des signaux modulés par trains d'impulsions PPM.
Les caractéristiques et avantages de l'invention apparaîtront plus clairement à la lecture de la description, faite à titre d'exemple, et des figures s'y rapportant qui représentent :
- Figure 1, synoptique de la partie de la chaîne d'émission d'un équipement IFF adaptée au mode d'émission d'interrogation Mk X et Mk XII, selon l'état de l'art,
- Figure 2, synoptique de la partie de la chaîne d'émission d'un équipement IFF adaptée au mode d'émission d'interrogation Mode S, selon l'état de l'art,
- Figure 3, synoptique d'une chaîne d'émission IFF, selon l'invention,
- Figure 4a, synoptique d'une source programmable de trains d'impulsions sur fréquence intermédiaire selon l'invention
- Figure 4b, représentation de quelques exemples d'instructions d'émission transmises par le dispositif d'instruction au dispositif de formatage.

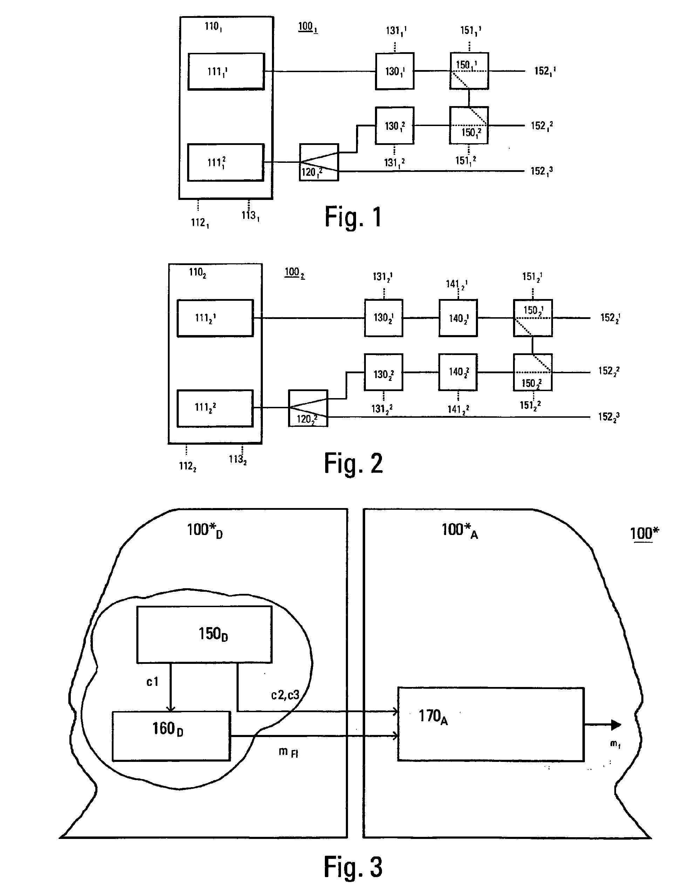

Le synoptique de la figure 1 présente la partie hors MSK et DPSK 100₁ de la chaîne actuelle d'émission d'un équipement IFF. La source de fréquence 110₁ est composé d'un oscillateur contrôle en tension VCO et d'une boucle à verrouillage de phase PLL, tel que un premier dispositif 111₁¹ fournit un signal avec une fréquence de 1090 MHz et un deuxième dispositif 111₁² fournit un signal avec une fréquence de 1030 MHz. La source de fréquence comporte en outre deux entrées 112₁ et 113₁, respectivement pour recevoir un ordre de mise à zéro de la source et un ordre de mise à zéro de la PLL (PLL_FAIL).

Cette source 110₁ est reliée à deux voies correspondant aux deux fréquences nécessaires, une pour l'émission et la réception (1090MHz dans l'exemple) et l'autre pour le test (1030MHz dans l'exemple)dans le mode Interrogation et réponse Mk X et Mk XII. Chacune des deux voies comporte un modulateur d'amplitude pour la réalisation de la modulation d'impulsions, respectivement 130₁¹ et 130₁². Chaque modulateur 130₁¹, 130₁² reçoit une commande de modulation 131₁¹, 131₁² respectivement pour le test ou la transmission.

Un commutateur 150₁¹ ou 150₁² commandé par une commande de commutation du fonctionnement de la chaîne de test en transmission ou inversement 151₁¹ ou 151₁² est placé en sortie du modulateur 130₁¹ ou 130₁² sur chaque voie. Ainsi, les deux voies fournissent respectivement un premier signal 152₁¹, permettant un test et un deuxième signal 152₁² d'interrogation. Un coupleur/diviseur 120₁² est placé en sortie de la source 110₁ sur la voie de transmission afin de pouvoir fournir un troisième signal 152₁³ permettant une commande en réception relative au changement de fonctionnement de la chaîne d'émission.

Le synoptique de la figure 2 présente la partie avec DPSK et hors MSK 100₂ de la chaîne actuelle d'émission d'un équipement IFF. La source de fréquence 110₂ est composée d'un opérateur de contrôle de tension VCO et d'une boucle de contrôle de phase PLL, tel que un premier dispositif 111₂¹ fournit un signal avec une fréquence de 1090 MHz et un deuxième dispositif 111₂² fournit un signal avec une fréquence de 1030 MHz. La source de fréquence comporte en outre deux entrées 112₂ et 113₂, respectivement pour recevoir un ordre de mise à zéro de la source et un ordre de mise à zéro de la PLL (PLL_FAIL).

Cette source 110₂ est reliée à deux voies correspondant aux deux fréquences nécessaires, une pour l'émission et la réception (1090MHz dans l'exemple) et l'autre pour le test (1030MHz dans l'exemple) dans le mode Interrogation Mode S. Chacune des deux voies comporte un modulateur d'amplitude pour la réalisation de la modulation d'impulsions, respectivement 130₂¹ et 130₂². Chaque modulateur 130₂¹, 130₂² reçoit une commande de modulation 131₂¹, 131₂² respectivement pour le test ou la transmission.

Chaque voie comporte en outre un modulateur DPSK 140₂¹ et 140₂² pour la réalisation de la modulation d'impulsions à saut de phase. La modulation DPSK est réalisée en commutant des déphaseurs. Chaque modulateur DPSK 140₂¹, 140₂² reçoit une commande de modulation DPSK 141₂¹, 141₂² respectivement pour le test ou la transmission.

Un commutateur 150₂¹ ou 150₂² commandés par une commande de commutation du fonctionnement de la chaîne de test en transmission ou inversement 151₂¹ ou 151₂² est placé en sortie du modulateur 130₂¹ ou 130₂² sur chaque voie. Ainsi, les deux voies fournissent respectivement un premier signal 152₂¹, permettant un test et un deuxième signal 152₂² d'interrogation. Un coupleur/diviseur 120₂² est placé en sortie de la source 110₂ sur la voie de transmission afin de pouvoir fournir un troisième signal 152₂³ permettant une commande en réception relative au changement de fonctionnement de la chaîne d'émission.

Une chaîne d'émission IFF classique comporte donc:
- Une première partie telle que représentée sur la figure 1 pour le mode Interrogation et réponse Mk X et Mk XII,
- une deuxième partie telle que représentée sur la figure 2 pour le mode Interrogation Mode S,
- une troisième partie non représentée pour le mode Interrogation et Réponses Mode 5. Elle comporte aussi une source constituant une troisième référence de fréquences, reliée à deux voies, chacune comportant un modulateur d'amplitude et un modulateur MSK pour la réalisation de la modulation d'impulsions à saut de phase minimum.

Dans les chaînes actuelles, une première fréquence ( 1030 MHz pour un interrogateur ) appelée communément OL est utilisée pour l'émission et le passage en fréquence intermédiaire FI de la réception ; une autre sert (1090 MHz pour un interrogateur) à la génération du test.

L'invention utilise une source unique de fréquence intermédiaire modulée 100*_{D} indépendante de la chaîne d'amplification 170_{A}, les paramètres physiques ( fréquence, phase & amplitude ) du signal de fréquence intermédiaire modulée m_{FI} étant totalement contrôlés par un système numérique 150_{D} à l'aide d'un premier signal de contrôle c₁. On dispose ainsi d'un dispositif unique 100* représenté par la figure 3 réalisant toutes les modulations mises en oeuvres dans le domaine de l'IFF.

La chaîne d'amplification 170_{A} recevant alors un signal de fréquence intermédiaire FI déjà modulée et à la fréquence souhaitée m_{FI}, celle-ci n'a plus qu'à réaliser une transposition en fréquence et puissance en fonction respectivement des deuxième et troisième signaux de contrôle c₂ et c₃. Ces transpositions étant toujours les mêmes, quelque soit le type signal IFF à mettre en oeuvre, la conception de la chaîne d'émission se voit ainsi grandement simplifiée.

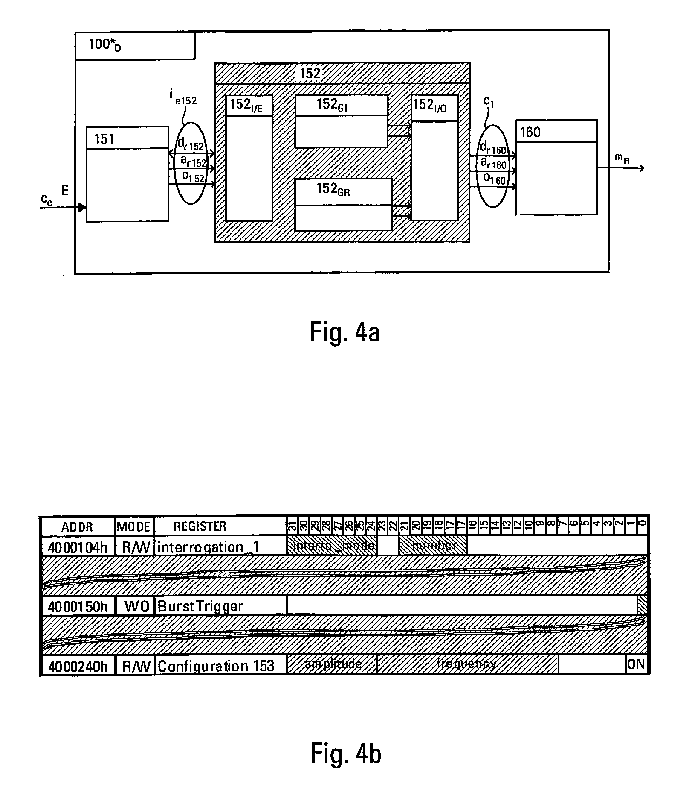

L'invention consiste à réaliser de façon plus simple les différentes modulations. Pour cela, l'architecture générale de la chaîne d'émission ( source de fréquences 110₁, 110₂ + modulateurs 13011, 13012, 13021, 13022, 14021, 140₂²) telle que représentée par les figures 1 et 2 est remplacée par une source programmable 100*_{D} afin de générer un signal de fréquence intermédiaire modulée m_{FI}. La source programmable de trains d'impulsions à fréquence intermédiaire comporte, comme le montre la figure 4a, une interface numérique 150_{D} et un synthétiseur de fréquence 160_{D}, par exemple un synthétiseur numérique direct DDS COTS.

Ainsi au lieu de faire transiter entre la fonction dite numérique 100*_{D} et la partie RF 100*_{A} une multitude de signaux 152₁¹, 152₁², 152₁³, 152₂¹ 152₂², 152₂³, on ne transmet plus qu'un signal modulé du fréquence intermédiaire m_{FI} qu'il suffit de transposer (en fréquence & puissance). Cette architecture permet donc de disposer sur une seule carte de l'ensemble de la fonction numérique 100*_{D}, avec une interface (non représentée) vers la partie RF 100*_{A} se plaçant en fréquence intermédiaire. Ainsi à partir d'un seul coeur 100*_{D} ( interface numérique 150_{D} + DDS COTS 160_{D}) générique on peut adapter plusieurs modules RF 100*_{A} afin de satisfaire différents besoins de puissance (portée de l'équipement ) ou fréquence ( interrogateur / répondeur ).

La génération et la modulation de la fréquence intermédiaire sont réalisées par un DDS du commerce 160_{D} recevant ces commandes c₁ d'une interface numérique spécifique 150_{D} (bus de données, adresses, signaux de contrôles et programme associé). Cette interface 150_{D} est capable de configurer le DDS 160_{D} en fréquence, puissance, phase et commander les sauts de phases ou fréquences au rythme imposé par les signaux IFF.

Ainsi à partir d'un seul composant 100*_{D}, on est capable de générer les signaux (fréquence + puissance + modulation) nécessaires à l'émission opérationnelle et au test bouclé.

La figure 4a montre plus précisément le composant numérique 100*_{D} constituant une source programmable de trains d'impulsions sur fréquence intermédiaire. La source 100*_{D} comporte une entrée E recevant une commande d'émission cₑ pouvant ou non comporter le mode d'émission IFF (Interrogations & Réponses Mk X et Mk XII, Interrogations Mode S, Réponses Mode S, Interrogations & Réponses Mode 5 par exemple).

Un dispositif d'instruction 151 est relié à cette entrée E de commande d'émission. Ce dispositif d'instruction 151 génère des instructions d'émission iₑ₁₅₂, qui comporte le mode d'émission. Quelques exemples d'instructions sont représentées par la figure 4b.

Un dispositif de formatage 152 transcrit les instructions d'émission iₑ₁₅₂ en au moins un premier signal de contrôle c₁. Ce dispositif de formatage 152 comporte une interface d'entrée 152_{I/E} comportant des registres d'entrée commandés par les instructions d'émission iₑ₁₅₂. Comme le montre la figure 4b, les instructions d'émission iₑ₁₅₂ comporte l'adresse du registre aᵣ₁₅₂ dans lequel une opération doit être effectué, le type d'opération à effectuer (lecture, écriture...) o₁₅₂, la valeur à écrire dans le registre indiqué lors d'une écriture dᵣ₁₅₂. Par exemple le mode interrogation_1 correspondra à une instruction d'émission iₑ₁₅₂ de lecture écriture à l'adresse 4000104h, des valeurs "interro_mode" dans les registres 24 à 31 de cette adresse et "nombre" dans les registres 16 à 21.

Par exemple, le dispositif d'instruction 151 peut être un microcontrôleur exécutant un programme applicatif paramétré par la commande d'émission cₑ, reçue par exemple via une liaision HDLC (High Level Data Link Control en anglais ou liaison de contrôle pour données de niveau supérieur).

Le dispositif d'instruction 151 peut être relié au dispositif de formatage 152 par un seul bus (non représenté).

Le dispositif de formatage 152 comporte des moyens de gestion des interrogations IFF 152_{GI}. Si la chaîne d'émission IFF effectue des tests de réception, le dispositif de formatage peut comporter aussi des moyens de gestion et génération des réponses de test IFF 152_{GR}.

En outre, le dispositif de formatage 152 comporte une interface de sortie 152_{I/O} générant à partir des valeurs des registres d'entrée compris dans l'interface 152_{I/E} au moins le premier signal de contrôle c₁.

Un dispositif de synthèse de fréquence numérique 160 reçoit au moins le premier signal de contrôle c₁. Le dispositif de synthèse de fréquence numérique 160 génère un signal m_{FI} modulé selon un train d'impulsions, ayant des caractéristiques qui sont déterminées par le premier signal de contrôle c₁, sur une fréquence intermédiaire. Les caractéristiques d'un train d'impulsions comportent la présence ou non de sauts de fréquence et les caractéristiques de ces sauts de fréquence.

Le dispositif de synthèse de fréquence numérique 160 comporte des registres d'entrée commandés par le premier signal de contrôle c₁ (valeur à attribuer au registre dᵣ₁₆₀, adresse du registre aᵣ₁₆₀, opération à effectuer sur le registre o₁₆₀).

Les informations transmises par l'intermédiaire du premier signal de contrôle (type d'émission et impulsions de modulation par exemple) le sont sous forme de signaux discrets. Le dispositif de formatage 152, par exemple une table de porte à champ programmable FPGA, effectue pour cela le séquencement des trains d'impulsions à émettre, à partir de paramètres stockés sous forme de registres (registres commandés par le dispositif d'instruction 151).

Le dispositif de formatage 152 peut être relié au dispositif de synthèse de fréquence numérique 160 par un seul bus (non représenté).

Le dispositif de synthèse de fréquence 160 génèrent au moins des signaux modulés par trains d'impulsions ou des signaux modulés par trains d'impulsions DPSK ou des signaux modulés par trains d'impulsions MSK ou des signaux modulés par trains d'impulsions PPM.

La modulation par impulsions peut être obtenue par commande d'interrupteurs du dispositif de synthèse de fréquence numériq ue 160 en ouvrant ou fermant la ligne de transmission. La modulation DPSK peut être obtenue de manière similaire à la modulation par impulsions avec, en plus, des commandes d'interrupteurs du dispositif de synthèse de fréquence numérique 160 commutant des segments de ligne représentant un déphasage aux fréquences considérées.

Dans le cas d'un interrogateur IFF,
- Soit le signal de bascule en sortie OL est à une fréquence de 1160 MHz avec une source fournissant un signal m_{FI} à une fréquence intermédiaire de 130 MHz. L'onde émise m*_{f}* est alors à 1030 MHz pour l'émission d'interrogations.
- Soit, le signal de bascule en sortie OL est à une fréquence de 1160 MHz avec une source fournissant un signal m_{FI} à une fréquence intermédiaire de 70 MHz. L'onde émise m*_{f}* est alors à 1090 MHz pour l'émission du test bouclé.

Dans le cas d'un répondeur IFF,
- Soit le signal de bascule en sortie OL est à une fréquence de 960 MHz avec une source fournissant un signal m_{FI} à une fréquence intermédiaire de 130 MHz. L'onde émise m*_{f}* est alors à 1090 MHz pour l'émission d'interrogations,
- Soit le signal de bascule en sortie OL est à une fréquence de 960 MHz avec une source fournissant un signal m_{FI} à une fréquence intermédiaire de 70 MHz. L'onde émise m*_{f}* est alors à 1030 MHz pour l'émission du test bouclé.

Le changement de fréquence du signal de bascule en sortie OL ne correspond qu'à un changement du facteur multiplicateur de la boucle à verrouillage de phase PLL du synthétiseur de fréquence 160.

Ainsi, l'invention permet d'utiliser des fréquences d'OL non standards (1160 MHz ou 960 MHz au lieu de 1090 MHz et 1030 MHz) et donc de disposer de fréquences permettant d'obtenir une fréquence intermédiaire réception à 70 MHz correspondant aux fréquences intermédiaires standards du grand public et autorisant l'utilisation de composants moins coûteux.

La chaîne d'émission IFF, telle que par exemple celle de la figure 3, comporte une source 100*_{D} comportant :
- une entrée E reliée à une interface homme-machine ou à un dispositif externe (non représentés), générant la commande d'émission cₑ,
- un dispositif de formatage 152 générant un deuxième et un troisième signal de contrôle c₂ et c₃ en fonction des instructions d'émission iₑ₁₅₂ comme le montre les figures 3 et 4a.

Ainsi, le dispositif de translation 170 de la chaîne d'émission IFF, telle que par exemple celle de la figure 3, recevant le signal modulé par un train d'impulsions sur fréquence intermédiaire m_{FI}, le deuxième et le troisième signal de contrôle c₂ et c₃, génère un signal m*_{f}* modulé par un train d'impulsions sur la fréquence donnée par le deuxième signal de contrôle c₂ ayant une amplitude donnée par le troisième signal de contrôle c₃.

La mise en oeuvre de techniques et de composants numériques permet, du fait de leur fiabilité et de la reproductibilité de leurs caractéristiques, de réduire les temps de réglages et mise au point de chaînes d'émission.

## Revendications

1. Source programmable de trains d'impulsions sur fréquence intermédiaire comportant:
- une entrée recevant une commande d'émission comportant le mode d'émission,
- un dispositif d'instruction relié à cette entrée de commande d'émission, générant des instructions d'émission,
- un dispositif de formatage transcrivant les instructions d'émission en au moins un premier signal de contrôle,
- un dispositif de synthèse de fréquence numérique recevant au moins le premier signal de contrôle, générant un signal modulé sur une fréquence intermédiaire,
**caractérisé en ce que** le dispositif de synthèse de fréquence numérique génère un signal modulé selon un train d'impulsions ayant des caractéristiques qui sont déterminées par le premier signal de contrôle.

2. Source selon la revendication précédente **caractérisée en ce que** les caractéristiques d'un train d'impulsions comporte la présence ou non de sauts de fréquence et les caractéristiques de ces sauts de fréquence.

3. Source selon l'une quelconque des revendications précédentes **caractérisée en ce que** le dispositif de formatage comporte une interface d'entrée comportant des registres d'entrée commandés par les instructions d'émission en fonction de la commande d'émission reçue par le dispositif d'instruction.

4. Source selon l'une quelconque des revendications précédentes **caractérisée en ce que** les instructions d'émission comporte le mode d'émission.

5. Source selon l'une quelconque des revendications précédentes **caractérisée en ce que** le dispositif de formatage comporte des moyens de gestion des interrogations IFF et une interface de sortie générant à partir des valeurs des registres d'entrée au moins le premier signal de contrôle.

6. Source selon l'une quelconque des revendications précédentes **caractérisée en ce que** le dispositif de formatage comporte des moyens de gestion des réponses de test IFF et une interface de sortie générant à partir des valeurs des registres d'entrée au moins le premier signal de contrôle.

7. Source selon l'une quelconque des revendications précédentes **caractérisée en ce que** le dispositif de synthèse de fréquence numérique comporte des registres d'entrée commandés par le premier signal de contrôle.

8. Source selon l'une quelconque des revendications précédentes **caractérisée en ce que** le dispositif d'instruction est relié au dispositif de formatage par un seul bus, et le dispositif de formatage est relié au dispositif de synthèse de fréquence numérique par un seul bus.

9. Chaîne d'émission IFF comportant:
- la source selon l'une quelconque des revendications précédentes, comportant :
• une entrée reliée à une interface homme-machine ou à un dispositif externe, générant la commande d'émission,
• un dispositif de formatage générant un deuxième et un troisième signal de contrôle en fonction des instructions d'émission,
- un dispositif de translation recevant le signal modulé par un train d'impulsions sur fréquence intermédiaire, le deuxième et le troisième signal de contrôle, générant un signal modulé par un train d'impulsions sur la fréquence donnée par le deuxième signal de contrôle ayant une amplitude donnée par le troisième signal de contrôle.

10. Chaîne d'émission IFF selon la revendication précédente **caractérisée en ce que** le dispositif de synthèse de fréquence génèrent au moins des signaux modulés par trains d'impulsions ou des signaux modulés par trains d'impulsions DPSK ou des signaux modulés par trains d'impulsions MSK ou des signaux modulés par trains d'impulsions PPM.

## Claims

1. Programmable source of pulse trains on an intermediate frequency comprising:
- an input receiving an emitting command comprising the emitting mode,
- an instruction device connected to this emitting command input, generating emitting instructions,
- a formatting device transcribing the emitting instructions into at least one first control signal,
- a digital frequency synthesizer device receiving at least the first control signal and generating a modulated signal on an intermediate frequency,
**characterized in that** the digital frequency synthesizer device generates a signal modulated according to a pulse train having characteristics that are determined by the first control signal.

2. Source according to the preceding claim, **characterized in that** the characteristics of a pulse train comprise the presence or absence of frequency hops and the characteristics of these frequency hops.

3. Source according to any one of the preceding claims, **characterized in that** the formatting device comprises an input interface comprising input registers controlled by emitting instructions as a function of the emitting command received by the instruction device.

4. Source according to any one of the preceding claims, **characterized in that** the emitting instructions comprise the emitting mode.

5. Source according to any one of the preceding claims, **characterized in that** the formatting device comprises means for the management of the IFF interrogations and an output interface generating at least the first control signal from the values of the input registers.

6. Source according to any one of the preceding claims, **characterized in that** the formatting device comprises means for the management of the IFF interrogations and an output interface generating at least the first control signal from the values of the input registers.

7. Source according to any one of the preceding claims, **characterized in that** the digital frequency synthesizer device comprises input registers controlled by the first control signal.

8. Source according to any one of the preceding claims, **characterized in that** the instruction device is connected to the formatting device by a single bus, and the formatting device is connected to the digital frequency synthesizer device by a single bus.

9. IFF emitting assembly comprising:
- the source according to any one of the preceding claims, comprising :
• an input connected to a man-machine interface or an external device, generating the emitting command,
• a formatting device generating a second control signal and a third control signal as a function of the emitting instructions,
- a translation device receiving the signal modulated by a pulse train on an intermediate frequency and the second and third control signals, and generating a signal modulated by a pulse train on the frequency given by the second control signal having an amplitude given by the third control signal.

10. IFF emitting assembly according to the preceding claim, **characterized in that** frequency synthesizer device generates at least pulse modulated signals or DPSK pulse modulated signals or MSK pulse modulated signals or PPM pulse modulated signals.

## Patentansprüche

1. Programmierbare Quelle von Impulsfolgen auf Zwischenfrequenz, die aufweist:
- einen Eingang, der einen Sendebefehl empfängt, der den Sendemodus enthält,
- eine Anweisungsvorrichtung, die mit diesem Sendebefehleingang verbunden ist und Sendeanweisungen erzeugt,
- eine Formatierungsvorrichtung, die die Sendeanweisungen in mindestens ein erstes Steuersignal umsetzt,
- eine Vorrichtung zur digitalen Frequenzsynthese, die mindestens das erste Steuersignal empfängt und ein auf eine Zwischenfrequenz moduliertes Signal erzeugt,
**dadurch gekennzeichnet, dass** die Vorrichtung zur digitalen Frequenzsynthese ein gemäß einer Impulsfolge moduliertes Signal erzeugt, das Eigenschaften hat, die vom ersten Steuersignal festgelegt werden.

2. Quelle nach dem vorhergehenden Anspruch, **dadurch gekennzeichnet, dass** die Eigenschaften einer Impulsfolge das Vorhandensein oder nicht von Frequenzsprüngen und die Eigenschaften dieser Frequenzsprünge aufweisen.

3. Quelle nach einem der vorhergehenden Ansprüche, **dadurch gekennzeichnet, dass** die Formatierungsvorrichtung eine Eingangsschnittstelle aufweist, die Eingangsregister enthält, die von den Sendeanweisungen in Abhängigkeit von dem Sendebefehl gesteuert werden, der von der Anweisungsvorrichtung empfangen wird.

4. Quelle nach einem der vorhergehenden Ansprüche, **dadurch gekennzeichnet, dass** die Sendeanweisungen den Sendemodus enthalten.

5. Quelle nach einem der vorhergehenden Ansprüche, **dadurch gekennzeichnet, dass** die Formatierungsvorrichtung Verwaltungsmittel der IFF-Abfragen und eine Ausgangsschnittstelle aufweist, die ausgehend von den Werten der Eingangsregister mindestens das erste Steuersignal erzeugt.

6. Quelle nach einem der vorhergehenden Ansprüche, **dadurch gekennzeichnet, dass** die Formatierungsvorrichtung Verwaltungsmittel der IFF-Testantworten und eine Ausgangsschnittstelle aufweist, die ausgehend von den Werten der Eingangsregister mindestens das erste Steuersignal erzeugt.

7. Quelle nach einem der vorhergehenden Ansprüche, **dadurch gekennzeichnet, dass** die Vorrichtung zur digitalen Frequenzsynthese Eingangsregister aufweist, die von dem ersten Steuersignal gesteuert werden.

8. Quelle nach einem der vorhergehenden Ansprüche, **dadurch gekennzeichnet, dass** die Anweisungsvorrichtung mit der Formatierungsvorrichtung durch einen einzigen Bus verbunden ist, und die Formatierungsvorrichtung mit der Vorrichtung zur digitalen Frequenzsynthese durch einen einzigen Bus verbunden ist.

9. IFF-Sendekette, die aufweist:
- die Quelle gemäß einem der vorhergehenden Ansprüche, die aufweist:
• einen mit einer Mensch-Maschine-Schnittstelle oder mit einer externen Vorrichtung verbundenen Eingang, der den Sendebefehl erzeugt,
• eine Formatierungsvorrichtung, die ein zweites und ein drittes Steuersignal in Abhängigkeit von den Sendeanweisungen erzeugt,
- eine Umsetzungsvorrichtung, die das von einer Impulsfolge auf Zwischenfrequenz modulierte Signal, das zweite und das dritte Steuersignal empfängt, ein von einer Impulsfolge auf der durch das zweite Steuersignal gegebenen Frequenz moduliertes Signal erzeugt, das eine durch das dritte Steuersignal gegebene Amplitude hat.

10. IFF-Sendekette nach dem vorhergehenden Anspruch, **dadurch gekennzeichnet, dass** die Vorrichtung zur Frequenzsynthese mindestens durch Impulsfolgen modulierte Signale oder durch DPSK-Impulsfolgen modulierte Signale oder durch MSK-Impulsfolgen modulierte Signale oder durch PPM-Impulsfolgen modulierte Signale erzeugt.
